# EUROPEAN PATENT SPECIFICATION

(11) **EP 0 569 834 B1**
(45) Date of publication and mention of the grant of the patent: **15.04.1998**
(21) Application number: 93107266.4
(22) Date of filing: 05.05.1993
(51) Int. Cl.: G01F 23/68

(54) **Electrical indicator for the fuel contained in the tank of a motor vehicle**
Elektrische Vorrichtung zur Anzeige des Kraftstoff-Füllbandes in einem Fahrzeugtank
Dispositif électrique pour mesurer le niveau du carburant dans le réservoir d'un véhicule

(30) Priority: 12.05.1992 IT TO920407
(43) Date of publication of application: 18.11.1993
(73) Proprietor: BITRON S.p.A., 10064 Pinerolo (Torino) (IT)
(72) Inventor: Bianco, Giovanni, I-17045 Legino (Savona) (IT)
(74) Representative: Appoloni, Romano

(56) References cited:
- DE-B- 1 263 333
- FR-A- 2 509 044
- FR-A- 2 517 054
- FR-A- 2 626 071

## Description

The present invention relates to an electrical indicator for indicating the fuel content of a motor vehicle tank.

From FR-A-2 509 044 it is known a device for indicating the fuel level in a tank in which a float is slidable under the sole action of the hydrostatic force on a vertical guide. Electric rheostats are provided on said guide and corresponding electric contacts are provided on said float. This device has no means for opposing to the hydrostatic force and gives at any moment an exact indication of the level of the fuel in the point where it is placed. But as known such an indication cannot correspond to the real quantity of the fuel left in the tank during the oscillation of the vehicle or when the vehicle runs under the effect of the centrifugal force.

From FR-A-2 626 071 it is known a device for indicating the fuel level in a tank comprising a float urged by a spring and slidable on a vertical shaft with which it is engaged by means capable of transforming the vertical sliding of the float in a rotating movement of the vertical shaft. The rotational movement of the vertical shaft is converted in an electric signal proportional to the angle described by the shaft. This device avoids the drawbacks of the device described in the above patent but the accuracy of the indication decreases when the diameter of the device decreases.

An electrical indicator for indicating the fuel content of a motor-vehicle tank according to the preamble of claim 1 is known from FR-A-2 517 054.

This indicator includes a spring interposed between the float and the top of the container whose function is to urge the float axially towards the bottom of the container so that the float follows the variations in the fuel level in the tank with continuity. This spring is however a critical component of the indicator in that it increases the frequency of oscillation of the float within the container, rendering the indication transmitted by the level indicator to an instrument arranged, in known manner, in the passenger compartment of the vehicle rather unstable and thus rendering the value of the fuel level difficult to read.

The object of the present invention is to provide an electrical fuel indicator which does not have these disadvantages.

This object is achieved by a device according to claim 1.

By virtue of this characteristic, the electrical indicator of the invention enables the reading of the fuel level indicator to be made considerably more stable and it may be calibrated simply and quickly. Moreover, the elimination of the axial biasing means for the float from the zone between the float and the top of the container facilitates the assembly of the indicator which is advantageous as regards the production costs.

Further characteristics and advantages of the present invention will become apparent from the detailed description which follows, with reference to the appended drawings, provided purely by way of non-limiting example, in which:

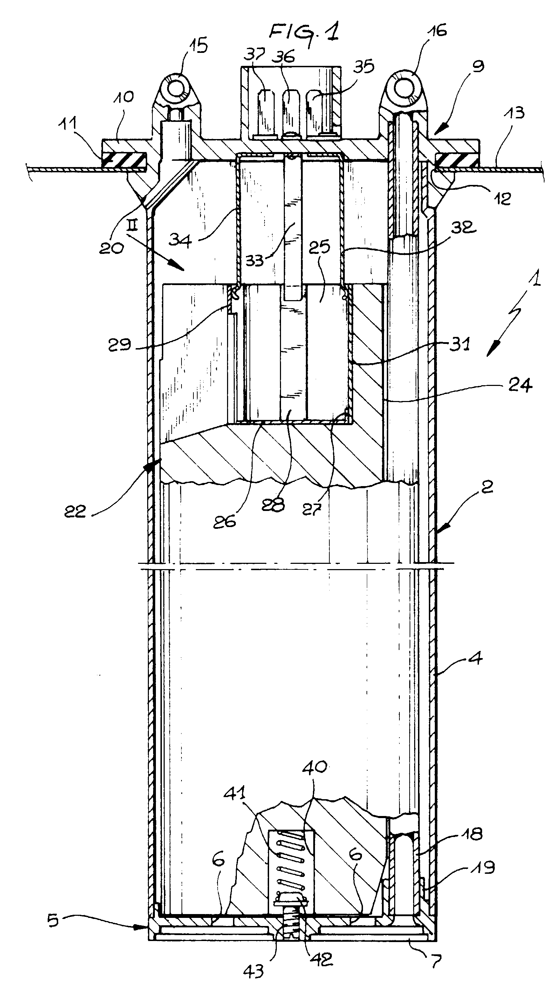

Figure 1 is a partially-sectioned side elevation view of an electrical indicator according to the invention,
Figure 2 is an exploded perspective view of a detail of Figure 1 indicated by the arrow II, and
Figure 3 is a partially-sectioned side elevation view of a detail of the indicator of Figure 1 of the invention.

With reference to the drawings, an electrical fuel indicator for indicating the fuel content of the tank of a motor vehicle is generally indicated 1. The electrical indicator 1 includes an elongate cylindrical container 2 whose peripheral wall 4 is made, for example, from moulded plastics material. The container 2 is intended to be located vertically within the fuel tank of a motor vehicle to provide electrical signals indicative of the fuel level in the tank and of the falling of this level below a predetermined value to two remotely located indicator instruments.

The container 2 has a length substantially corresponding to the depth of the tank and has a base 5 with apertures 6 for retaining a metal filter mesh 7 on its under side in known manner. The apertures 6 are provided to allow some of the fuel in the tank to enter the container 2 during use of the indicator.

The peripheral wall 4 of the container 2 is closed at its upper end by a lid 9 having a radial flange 10 which enables the indicator to be fixed to the tank in known manner. The indicator is introduced through a hole 12 formed in the top wall 13 of the tank and a sealing washer 11 is interposed between the flange 10 and the top wall 13. The lid 9 has two connectors 15 and 16 for connecting a fuel delivery line to the engine and a fuel return line to the tank respectively. The connector 16 houses the end of a dip tube 18 which extends longitudinally within the container 2 adjacent the inner surface of the peripheral wall 4 down to a cylindrical connector 19 provided in the base 5 so as to connect the connector 16 of the lid 9 to the region of the tank beneath the base 5. The connector 15 opens to the outside of the wall 4 through an aperture 20 formed in the lid 9.

Within the container 2 is a float 22 of elongate cylindrical shape with a longitudinal re-entrant portion 24 of a shape corresponding to that of the delivery tube 18. Thus the float 22 is slidable within the container 2 but is prevented from rotating therein.

The float 22 has an axial chamber 25 of substantially cylindrical shape in its upper portion facing the lid 9 and at the bottom of which is a metal blade 26 with three appendages 27, 28 and 29 which extend along the walls of the chamber 25 towards the lid 9. The shortest appendage 27 contacts the bottom part of an elongate, plate-shaped resistor 31 whose bottom edge bears against the bottom of the chamber 25. The appendage 28 is an elongate metal strip which terminates in correspondence with the upper surface of the float 22 while the appendage 29 is a metal strip of upside-down L-shape with the horizontal arm of the L-shape located in correspondence with the upper end of the chamber 25.

From the underside of the lid 9 project three arms 32, 33, and 34 which engage the surface of the resistor 31, the elongate appendage 28 and the L-shaped appendage 29 respectively. Each of the arms 32, 33 and 34 is connected to a respective flat pin 35, 36 and 37 for connection to instruments for indicating the fuel level and the falling of this level below a predetermined value (not illustrated in the drawings).

The lower end of the float 22 has an axial blind hole 40 which houses a helical spring 41a having one end bearing against the end wall of the hole 40 while the opposite end of the spring 41 engages a washer 42 carried by a calibration screw 43 engaged in the base 5.

In operation, the position of the float 22 within the container 2 is determined by the equilibrium between the gravitational force due to the mass of the float, the resilient force of the helical spring 41a and the hydrostatic force exerted by the fuel in the container 2. A variation in the fuel level within the container 2 thus causes a variation in the hydrostatic force which results in the axial movement of the float 22 until it reaches a new position of equilibrium and, hence, the corresponding movement of the free end of the arm 32 along the resistor plate 31 so as to vary the strength of the electrical current in the indicator circuit and the consequent indication of the fuel level in the tank. When the fuel level falls below a predetermined value, the free end of the arm 34, by engaging the horizontal arm of the L-shaped appendage 29, closes the circuit including the reserve indicator light. The arm 33 ensures electrical contact between the blade 26 and the flat pin 36 in all conditions of operation of the indicator.

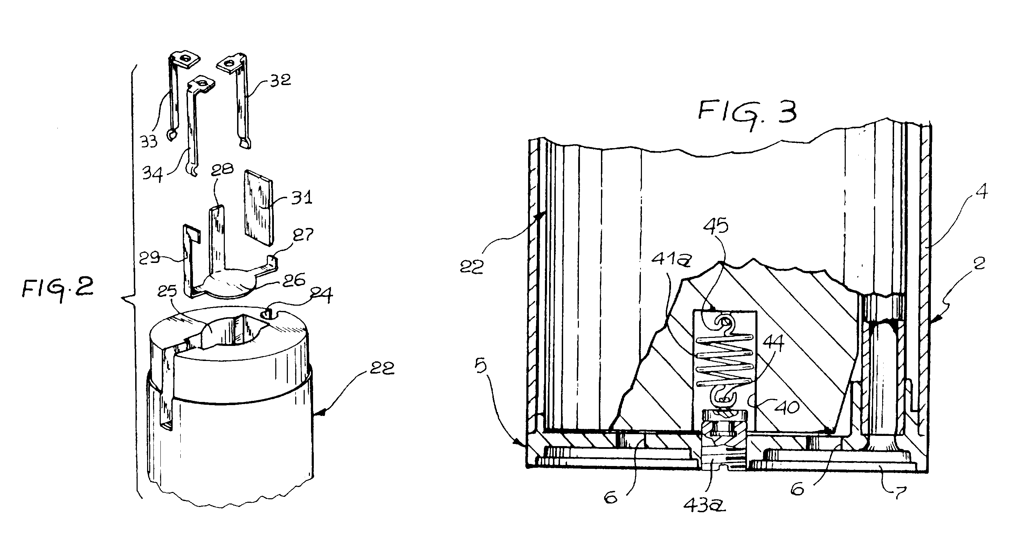

Figure 3 shows a detail of the indicator. The force which returns the float 22 towards the bottom of the container 2, opposing the hydrostatic force, is exerted by a helical spring 41a working under traction force acting in opposition to the hydrostatic forces acting on the float. The spring 41a is located in the blind hole 40 of the float 22. Both ends of the spring 41a are formed as hooks and engage eyes 44 and 45 provided on a calibration screw 43a, engaged in the base 5, and the blind end of the hole 40, respectively.

By virtue of the present invention it is possible to produce an electrical fuel level indicator which, to advantage, eliminates a critical component of the indicators of the prior art, that is, the helical spring interposed between the float and the lid of the container. Thus it is possible to improve the calibration of the electrical indicator and obtain greater stability of the fuel level indication provided by the float with a reduction in the production costs.

## Claims

1. An electrical indicator (1) for indicating the fuel content of a motor vehicle tank, comprising a support member (2) containing a float (22) sliding axially vertically within the support member (2) under the effect of Archimede's force generated by the fuel, said support member (2) being closed at its upper end by a lid (9), and closed at its lower end by a base (5), wherein
- said support member (2) has a form of a substantially cylindrical elongate container having a length substantially corresponding to the depth of a tank to which it can be associated;
- said float (22) comprises, in correspondence of its lower portion, an axial blind hole (40) lodging a helical spring (41, 41a) operatively interposed between said float (22) and a calibration screw (43, 43a) lodged in said base (5) and, in correspondence of its upper portion, an axial chamber (25) lodging a resistor (31) and an L-shape appendage (29), said resistor (31) and an L-shape appendage (29) being connected to a mutual electric connector by a metal blade (26);
- said lid (9) comprises a first hydraulic connector (16) for connecting a fuel delivery line to the engine, a second hydraulic connector (15) for connecting a fuel return line to the tank, a radial flange (10) and a sealing washer (11) to be housed between said flange (10) and the top wall (13) of the tank when said electrical indicator (1) is arranged vertically within said tank, three flat pins (35-37) connectable to instruments for indicating the fuel level and the falling of this level below a predetermined value and respectively connected to the resistor (31) by a sliding arm (32), to the mutual electric connector, to the appendage L-shape (29) by a sliding arm (34);
- said base (5) comprises apertures (6) connecting the inner part of the elongate cylindrical container (2) to the outer part, a cylindrical connector (19) connected to the delivery tube (18) of the first hydraulic connector (16) ;
characterised in that
- the mutual electric connector comprises an elongated appendage (28) on which an arm (33) is slidable, said arm (33) being electrically connected to the second flat pin (36);
- the helical spring (41a) is connected to an eye (44) of the calibrated screw (43a) and another eye (45) of the float (22) so as to be able to work under traction force acting in opposition to the hydrostatic forces acting on the float.

## Patentansprüche

1. Elektrische Anzeigeeinrichtung (1) zum Anzeigen des Kraftstoffinhaltes eines Kraftfahrzeugtanks, die ein Trageglied (2) aufweist, das einen Schwimmer (22) enthält, der axial und vertikal innerhalb des Trageglieds (2) unter der Wirkung der Archimedischen Kraft gleitet, die durch den Kraftstoff erzeugt wird, wobei das Trageglied (2) an seinem oberen Ende durch einen Deckel (9) abgeschlossen wird und an seinem unteren Ende durch ein Grundteil (5) abgeschlossen wird, bei welcher
- das Trageglied (2) die Gestalt eines im wesentlichen zylindrischen länglichen Behälters hat, der eine Länge aufweist, die im wesentlichen der Tiefe eines Tanks entspricht, dem er zugeordnet werden kann;
- der Schwimmer (22) entsprechend seinem unteren Abschnitt ein axiales Blindloch bzw. eine axialen Blindbohrung (40) umfaßt, in der eine Schraubenfeder (41, 41a) untergebracht ist, die betriebsmäßig zwischen dem Schwimmer (22) und einer Kalibrierschraube (43, 43a) angeordnet ist, die in dem Grundteil (5) untergebracht ist, und entsprechend seinem oberen Abschnitt eine Axialkammer (25) umfaßt, in der ein Widerstand (31) und ein L-förmiges Anhängsel (29) untergebracht ist, wobei der Widerstand (31) und ein L-förmiges Anhängsel (29) mit einer wechselseitigen bzw. gegenseitigen Verbindungseinrichtung durch ein Metallblatt (26) verbunden ist;
- der Deckel (9), eine erste hydraulische Verbindungseinrichtung (16) zum Anschließen einer Kraftstoff-Zuführleitung zu dem Motor, eine zweite hydraulische Verbindungseinrichtung (15) zum Anschließen einer Kraftstoffrückführleitung zu dem Tank, einen radialen Flansch (10) und eine abdichtende Unterlegscheibe (11), die zwischen dem Flansch (10) und der oberen Wand (13) des Tanks untergebracht werden soll, wenn die elektrische Anzeigeeinrichtung (1) vertikal innerhalb des Tanks angeordnet ist, drei Flachstifte (35-37), die mit Instrumenten zum Anzeigen des Kraftstoffpegels und des Abfallens dieses Pegels unterhalb eines vorbestimmten Wertes verbindbar sind und die jeweilig mit dem Widerstand (31) durch einen gleitenden Arm (32), der wechselseitigen bzw. gegenseitigen elektrischen Verbindungseinrichtung und mit dem L-förmigen Anhängsel (29) durch einen gleitenden Arm (34) verbunden sind, aufweist;
das Grundteil (5) Öffnungen (6) umfaßt, die den inneren Teil des länglichen zylindrischen Behälters (2) mit dem äußeren Teil verbinden, wobei eine zylindrische Verbindungseinrichtung (19) mit der Zuführröhre (18) der ersten hydraulischen Verbindungseinrichtung (16) verbunden ist;
**dadurch gekennzeichnet**, daß
die wechselseitige bzw. gegenseitige elektrische Verbindungseinrichtung ein längliches Anhängsel (28) aufweist, auf dem ein Arm (33) gleiten kann, wobei der Arm (33) elektrisch mit dem zweiten Flachstift (36) verbunden ist;
die Schraubenfeder (41a) mit einem Auge bzw. einer Öse (44) der kalibrierten Schraube (43a) und einem anderen Auge bzw. einer anderen Öse (45) des Schwimmers (22) verbunden ist, um so in der Lage zu sein, unter der Zugkraft zu arbeiten, die entgegengesetzt zu den hydrostatischen Kräften wirkt, die auf den Schwimmer wirken.

## Revendications

1. Indicateur électrique (1) servant à indiquer le contenu en carburant d'un réservoir de véhicule à moteur, comprenant un élément de support (2) qui contient un flotteur (22) pouvant coulisser dans la direction verticale axiale à l'intérieur de l'élément de support (2) sous l'effet de la force d'Archimède exercée par le carburant, ledit élément de support (2) étant fermé à son extrémité supérieure par un couvercle (9), et fermé à son extrémité inférieure par une base (5), dans lequel
- ledit élément de support (2) a la forme d'un récipient allongé essentiellement cylindrique, dont la longueur est approximativement égale à la profondeur d'un réservoir auquel on pourrait l'associer,
- ledit flotteur (22) comporte, dans sa partie inférieure, un trou borgne axial (40) où se loge un ressort hélicoïdal (41, 41a) prévu pour fonctionner en interposition entre ledit flotteur (22) et une vis de calibrage (43, 43a) logée dans ladite base (5), et, dans sa partie supérieure, une chambre axiale (25) dans laquelle est logé un résistor (31) et un appendice en forme de "L" (29), ledit résistor (31) et ledit appendice en forme de "L" (29) étant tous deux reliés à un connecteur électrique commun par l'entremise d'une lame métallique (26),
- ledit couvercle (9) comporte un premier connecteur hydraulique (16) servant à relier une conduite d'alimentation en carburant au moteur, un second connecteur hydraulique (15) servant à relier une conduite de retour du carburant au réservoir, une bride radiale (10) et une rondelle d'étanchéité (11) insérée entre ladite bride (10) et la paroi supérieure (13) du réservoir quand ledit indicateur électrique (1) est placé verticalement à l'intérieur dudit réservoir, trois épingles plates (35, 36, 37) que l'on peut connecter à des instruments servant à indiquer le niveau de carburant et la chute de ce niveau au-dessous d'une valeur prévue, et reliées, respectivement, au résistor (31) par un arbre à coulisse (32), au connecteur électrique commun, et à l'appendice en forme de "L" (29) par un arbre à coulisse (34),
- ladite base (5) comporte des orifices (6) reliant l'intérieur du récipient allongé cylindrique (2) à l'extérieur, un connecteur cylindrique (19) relié au tube d'alimentation (18) du premier connecteur hydraulique (16),
caractérisé en ce que
- le connecteur électrique commun comporte un appendice allongé (28) le long duquel peut coulisser un bras (33), ledit bras (33) étant relié électriquement à la seconde épingle plate (36),
- le ressort hélicoïdal (41a) est relié à un oeillet (44) de la vis de calibrage (43a) ainsi qu'à un oeillet (45) du flotteur (22), de manière à ce que le flotteur puisse fonctionner sous une force de traction agissant en direction opposée aux forces hydrostatiques auxquelles il est soumis.
